# Europäisches Patentamt
## European Patent Office
## Office européen des brevets

(19)

(11) Veröffentlichungsnummer: **0 007 109**
**B1**

(12) **EUROPÄISCHE PATENTSCHRIFT**

(45) Veröffentlichungstag der Patentschrift: 28.04.82

(21) Anmeldenummer: 79102446.6

(22) Anmeldetag: 16.07.79

(51) Int. Cl.³: **G 05 D 11/03, B 01 J 4/02, F 04 B 13/02**

(54) Vorrichtung zum Dosieren einer Chemikalienlösung in strömende Frischflüssigkeit.

(30) Priorität: 19.07.78 DE 2831625

(43) Veröffentlichungstag der Anmeldung:
23.01.80 Patentblatt 80/2

(45) Bekanntmachung des Hinweises auf die Patenterteilung:
28.04.82 Patentblatt 82/17

(84) Benannte Vertragsstaaten:
BE CH FR GB IT NL

(56) Entgegenhaltungen:
DE - A - 1 528 633
DE - A - 2 600 572
DE - C - 919 373
FR - A - 2 230 876

(73) Patentinhaber: LANG APPARATEBAU GMBH
Raiffeissenstrasse 7
D-8221 Siegsdorf Obb. (DE)

(72) Erfinder: Kern, Johann
Birkenweg 6
D-8221 Vachendorf (DE)
Erfinder: Eichner, Walter
Hammertinger Strasse 1
D-8221 Siegsdorf (DE)

(74) Vertreter: Bornemann, Dieter, Dipl.-Ing.
c/o Henkel Kommanditgesellschaft auf Aktien -
Patentabteilung- Postfach 1100 Henkelstrasse 67
D-4000 Düsseldorf (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Vorrichtung zum Dosieren einer Chemikalienlösung in strömende Frischflüssigkeit

Die Erfindung betrifft eine Vorrichtung zum Dosieren einer Chemikalienlösung in strömende Frischflüssigkeit, insbesondere Wasser, einer Flüssigkeitsleitung, insbesondere Wasserleitung, mit Hilfe einer durch den Flüssigkeitsdruck, insbesondere Wasserdruck, mechanisch angetriebenen Kolbendosierpumpe, die die Chemikalienlösung aus einem Produktvorratsbehälter in ihren eine Menge der Flüssigkeit enthaltenden Dosierpumpenraum fördert und aus diesem über ein federvorbelastetes Rückschlagventil gegen die Federkraft des letzteren in die Flüssigkeitsleitung treibt.

Vorrichtungen dieser Art sind aus den DE—A—2 352 677 und DE—A—26 00 572 bekannt. Diese Vorrichtungen sind zwar selbstansaugend, selbstentlüftend und selbstspülend, sie benötigen jedoch eine der Kolbendosierpumpe zugeordnete zusätzliche Schwimmerkammer, die vor Trockenlauf schützt. Ein weiterer Nachteil der bekannten Vorrichtungen besteht darin, daß dei der Inbetriebnahme zwar Wasser in die Schwimmerkammer und in den Pumpenraum einfließt, die im Pumpenraum vorhandene Luft jedoch nicht auf den Systemdruck, das heißt auf den Flüssigkeitsdruck in der Flüssigkeitsleitung, verdichtet wird, so daß sich vor allem beim Anlaufen der bekannten Vorrichtung Ansaugschwierigkeiten an der Kolbendosierpumpe ergeben können.

Der Erfindung liegt die Aufgabe zugrunde, die bekannten Vorrichtungen so zu verbessern, daß die ihnen zugeordnete Kolbendosierpumpe auch bei der Inbetriebnahme ein einwandfreies Ansaugverhalten zeigt. Dazu ist erforderlich, die Kolbendosierpumpe so auszubilden, daß sie Luft gegen den Druck der Flüssigkeitsleitung in diese eindosieren kann. Die neue Vorrichtung soll selbstentlüftend, selbstansaugend, selbstspülend und trockenlaufsicher sein. Die erfindungsgemäße Lösung dieser Aufgabe ist bei einer Vorrichtung eingangs genannter Art gekennzeichnet durch eine den Dosierpumpenraum mit Frischflüssigkeit unter Druck beaufschlagende, zweite Pumpe mit mit dem Dosierkolben der Dosierpumpe gleichlaufendem Kolben wabei die Kolben der beiden Pumpen zueinander unbeweglich mit Hilfe einer Durchtriebsstange aneinander qekoppelt sind.

Erfindungsgemäß ist eine also zweite Pumpe vergesehen, deren Kolben starr mit dem Kolben der eigentlichen Kolbendosierpumpe gekoppelt ist, so daß beide Kolben ein und dieselbe Hubbewegung ausführen. Die zweite Pumpe fördert bei jedem Dosierhub zugleich Flüssigkeit in den Dosierpumpenraum der eigentlichen Dosierpumpe. Dadurch wird—in Zusammenwirkung mit dem federvorbelasteten Rückschlagventil—erfindungsgemäß erreicht, daß eventuell mit Hilfe der Dosierpumpe angesaugte Luft beim Austreten des Dosierkolbens aus dessen Kolbenraum auf einen Druck komprimierbar ist, der denjenigen in der zu beaufschlagenden Flüssigkeitsleitung übersteigt. Hierdurch wiederum wird bewirkt, daß die vorkomprimierte Luft dosiert werden kann und damit die Dosierpumpe das jeweilig von ihr angesaugte Chemikal gegen den Systemdruck, das heißt den Druck in der zu beaufschlagenden Flüssigkeitsleitung, ansaugen kann.

Demgegenüber ließ sich bei bisherigen Vorrichtungen der eingangs genannten Art im Dosierpumpenraum vorhandene bzw. in diesen eingesaugte Luft nicht auf den Systemdruck oder einen höheren Druck komprimieren. Deshalb aber konnten die bekannten Dosierpumpen wegen ihres an sich kleinen Hubvolumens die in ihrem Pumpenraum vorhandene Luft nicht verdrängen mit dem Ergebnis, daß oft nur ein Pulsieren der Luft auftrat und die Dosierpumpe nicht saugte. Diese Schwierigkeiten sind—wie gesagt—durch die Erfindung überwunden worden.

Eine vorteilhafte Ausgestaltung des Erfindungsgegenstandes besteht darin, daß die der Dosierpumpe zugeordnete zweite Pumpe ohne Ventile ausbildbar ist. Gemäß weiterer Erfindung kann nämlich der erforderliche Ventileffekt durch mindestens zwei mit Abstand voneinander um die die Kolben der beiden Pumpen unbeweglich verbindende Durchtriebsstange gelegte, federnd wirkende Nutringe erreicht werden. Letztere wirken dann als Ventil zwischen dem Pumpenraum der zweiten Pumpe und dem Dosierpumpenraum. Die beiden Nutringe sollen so ausgebildet sein, daß sie die Verbindung zwischen den beiden Pumpenräumen bei der Herausbewegung der Kolben aus den zugehörigen Zylindern schließen und beim Hereinbewegen der Kolben in die Zylinder an der Nutring-Dichtkante öffnen.

Der Pumpenraum der zweiten Pumpe wird vorteilhaft bei Austritt von deren Kolben aus dem zugehörigen Zylinder mit dem (vollen) Druck der Flüssigkeitsleitung beaufschlagt. Die zweite Pumpe fördert dann im wesentlichen Frischflüssigkeit in den Dosierpumpenraum. Durch diese mit Hilfe der zweiten Pumpe eindosierte Flüssigkeit wird die Dosiergenauigkeit jedoch nicht beeinträchtigt, da die angesaugte Chemikalienmenge durch die eigentliche Dosierpumpe definiert ist. Die mit Hilfe der zweiten Pumpe erfindungsgemäß in den Dosierpumpenraum eingebrachte Flüssigkeitsmenge führt aber zu einer Vorverdünnung des zugleich nach dort gesaugten Chemikals. Das hat den Vorteil, daß an der Impfstelle, d.h. an der Eintrittsstelle des Dosiermittels in die Flüssigkeitsleitung, eine bessere Vermischung mit der dort anstehenden Frischflüssigkeit gewährleistet ist.

Ebenso wie bei den bekannten Vorrichtungen liegt zwischen dem Dosierpumpenraum und der Eintrittsstelle des Dosiermittels in die Flüssigkeitsleitung ein federvorbelastetes Rückschlagventil, gegen dessen Federkraft das gegebenenfalls verdünnte Chemikal in die Flüssigkeitsleitung, aus dem Dosierpumpenraum gepreßt wird. In den bekannten Fällen hat das federvorbelastete Rückschlagventil nur die Aufgabe, ein Zurücksaugen bzw. Aushebern der Dosierflüssigkeit aus derem Vorratsbehälter bei einem auftretenden Vakuum bzw. Unterdruck in der Flüssigkeitsleitung zu verhindern. Das Rückschlagventil wird deshalb zum Einstellen eines den Druck in der Flüssigkeitsleitung übersteigenden Drucks im Dosierpumpenraum vorgespannt.

Anhand der schematischen Darstellung eines Ausführungsbeispiels der erfindungsgemäßen Vorrichtung werden weitere Einzelheiten erläutert. Die Dosierpumpe selbat ist dabei zweigeteilt—nämlich in der rechten Ausführung im unteren Totpunkt (UT) und in der linken Ausführung im oberen Totpunkt (OT)—gezeichnet. Obwohl die erfindungsgemäße Vorrichtung zum Eindosieren in Flüssigkeiten aller Art an sich geeignet ist, wird im folgenden der Einfachheit halber auf das Eindosieren in Wasser einer Wasserleitung allein Bezug genommen.

Das Wasser läuft in der Vorrichtung durch den Zulauf 1 in Pfeilrichtung 2 über eine Wasserleitung 3 teilweise oder ganz durch einen Wassermotor 4 und tritt in Pfeilrichtung 5 aus dem Auslauf 6 aus. Auf den Wassermotor 4 ist ein Getriebe 7 mit Getrieberaum 8 geschaltet. Letzterer ist mit dem Wassersystem, d. h. der Wasserleitung 3, und mit dem nachgeschalteten Exzenterraum 9 über einen Ventilsitz 10 und eine Ventilschraube 11 verbunden. Der entsprechende Weg des Wassers ist durch die Pfeile 12 gekennzeichnet. Das Getriebe 7 betätigt eine Antriebswelle 13, die mit einem im Exzenterraum 9 befindlichen Exzenter 14 verbunden ist. Bei geschlossenem Ventilsitz 10 ist der Exzenterraum 9 gegenüber dem Getrieberaum 8 mit Hilfe des Nutrings 15 abgedichtet. Am Exzenter 6 bzw, an der Antriebswelle 13 ist eine Funktionsanzeige 16 angekoppelt, die durch eine klarsichtige Verschraubung 17 hindurch von außen her sichtbar ist.

Auf den Exzenter 14 des vorbeschriebenen Antriebsteils der Vorrichtung ist ein Pleuel 18 gesetzt. Dieses ist mit dem Kolben 19 der insgesamt mit 20 bezeichneten zweiten Pumpe gekoppelt. Der Kolben 19 wiederum ist über die Durchtriebsstange 21 gleichlaufend fest mit dem Dosierkolben 22 der insgesamt mit 23 bezeichneten eigentlichen Kolbendosierpumpe verbunden. In der OT-Stellung (OT=oberer Totpunkt) der zweiten Pumpe 20 ist deren Pumpenraum über Einlaufschlitze 25 mit dem Exzenterraum 9 verbunden. Der ensprechende Weg des Wassers ist durch die Pfeile 26 in der linken Hälfte der gezeichneten Pumpenanordnung gekennzeichnet.

Weitere Teile der Vorrichtung sind eine zu einem (nichtgezeichneten) Vorratsbehälter des Dosierchemikals führende Saugleitung 27, zwischen dieser und dem Pumpenzylinder 28 der Dosierpumpe 23 liegende Saugventile 29 sowie ein zwischen dem Pumpenzylinder 28 und dem Dosierpumpenraum 30 der Dosierpumpe 23 liegendes Druckventil 31. Der Dosierpumpenraum 30 ist über ein federvorbelastetes Rückschlagventil 32 und eine Dosierleitung 33 mit der Impfstelle 34 der Wasserleitung 3 verbunden. Das Eindosieren erfolgt bei Betrieb in Pfeilrichtung 35 durch ein Schlauchventil 36.

Der Dosierkolben 22 der Dosierpumpe 23 ist mit Hilfe eines O-Ringes 37 abgedichtet. Um die die Kolben 19 und 22 der beiden Pumpen festverbindende Durchtriebsstange 21 sind zwei Nutringe 38 und 39 gelegt, die zugleich ein Saug- und Druckventil des Kolbens 19 der zweiten Pumpe 20 bilden. Das federvorbelastete Rückschlagventil 32 liegt vorzugsweise höher als der Pumpenzylinder 28 der Dosierpumpe 23. Die Durchtriebsstange 21 dichtet die Verbindung der beiden Pumpenräume 24 and 30 mit Hilfe des Nutrings 39 ab.

Die Vorrichtung funktioniert folgendermaßen; Beim Inbetriebnehmen fließt Wasser über den Zulauf 1 in den Wassermotor 4 und verläßt die Vorrichtung über den Auslauf 6. Der Wassermotor 4 treibt über das Getriebe 7 und die Antriebswelle 13 den Exzenter 14 an. Dabei führen die beiden mit Hilfe der Durchtriebsstange 21 miteinander gekoppelten Kolben 19 und 22 der beiden Pumpen 20 und 23 infolge der Kopplung mit dem Pleuel 18 eine Hubbewegung aus.

Taucht nun der Kolben 19 der zweiten Pumpe 20 in den oberen Nutring 38 ein (vgl. die rechte Hälfte der gezeichneten Pumpenanordnung), so wird das über die Einlaufschlitze 25 in den Pumpenraum 24 der zweiten Pumpe 20 eingesaugte Wasser mit Druck beaufschlagt. Dabei öffnen sich die Dichtlippen des unteren, dem Dosierpumpenraum 30 zugewandten Nutrings 39 und Wasser gelangt an der Durchtriebsstange 21 vorbei in den Dosierpumpenraum 30. Zugleich mit der vorgenannten Bewegung taucht der Kolben 22 der Dosierpumpe 23 in deren O-Ring 37 ein und verdrängt das über den (nichtgezeichneten) Chemikalienvorratsbehälter und die Saugleitung 27 eingesaugte Chemikal oder etwa eingedrungene Luft (bei Chemikalienmangel) in Pfeilrichtung 40 durch eine Längsbohrung des Dosierkolbens 22 und über das Druckventil 31 ebenfalls in den Dosierpumpenraum 30. Etwa eingebrachte Luft (bei Chemikalienmangel) wird hierbei auf den Druck verdichtet, der momentan im Dosierpumpenraum 30 herrscht. Des Gemisch Wasser/Chemikal oder Wasser/Luft wird nunam Ende der vorbeschriebenen Kolbenbewegung—in Pfeilrichtung 35 über das federvorbolastete Rückschlagventil 32, die Dosierleitung 33 und die Impfstelle 34 in die Wasserleitung 3 eingetrieben.

Bei der Bewegung der über die Durchtriebsstange 21 verbundenen Kolben 19 und 22 nach oben (vergleiche die linke Hälfte der gezeichneten Pumpenanordnung), also beim Ansaugvorgang, entsteht im Pumpenzylinder 28 der Dosierpumpe 23 ein Unterdruck bzw. ein Vakuum. Der Unterdruck herrscht solange, bis der Kolben 22 der Dosierpumpe 23 aus dem zugehörigen O-Ring 37 austaucht. Bei diesem Ansaugen wird der Pumpenzylinder 28 der Dosierpumpe 23 über die Saugleitung 27 und die Saugventile 29 mit Chemikal bzw. Luft gefüllt. Bei derselben Bewegung entsteht im Pumpenraum 24 der zweiten Pumpe 20 durch die Wirkung des nun an der Duchtriebsstange 21 anliegenden unteren Nutrings 39 ein Unterdruck bzw. ein Vakuum. Dieser Unterdruck steigt solange an, bis die durch ihn auf den oberen Nutring 38 ausgeübte Kraft die Kraft überschreitet, mit der der obere Nutring 38 den Kolben 19 der zweiten Pumpe 20 umschließt. Wenn die Unterdruckkraft größer als die Anpreßkraft des Nutrings 38 wird, öffnen sich die Dichtlippen des letzteren und es kann Wasser von oben her, das heißt aus dem Exzenterraum 12, in den Pumpenraum 24 der zweiten Pumpe 20 einfließen.

Durch das federvorbelastete Rückschlagventil 32 soll erreicht werden, daß der Druck im Dosierpumpenraum 30 größer werden kann als in der Wasserleitung 3 bzw. in deren Auslauf 6. Bei entsprechender Ausbildung bzw. Vorspannung des federvorbelasteten Rückschlagventils 32 ergibt sich der Vorteil, daß etwa in den Pumpenzylinder 28 der Dosierpumpe 23 eingebrachte Luft im Dosierpumpenraum 30 auf einen den Wasserdruck im Auslauf 6 übersteigenden Druck komprimierbar ist. Auf diese Weise kann auch Luft problemlos dosiert werden. Damit ist ein korrektes Ansaugen der Dosierpumpe auch in ungünstigen Fällen insbesondere auch bei Inbetriebnahme der Vorrichtung, gewährleistet.

Durch das federvorbelastete Rückschlagventil 32 wird ferner erreicht, daß bei etwa auftretendem Unterdruck in der Wasserleitung 2 bzw. in deren Auslauf 6 Chemikal nicht eingesaugt werden kann, wenn nur die Feder des Rückschlagventils 32 so vorgespannt ist, daß sie mindestens 1 bar Druck hält.

Liste der Bezugszeichen

1=Zulauf
2=Pfeilrichtung
3=Wasserleitung
4=Wassermotor
5=Pfeilrichtung
6=Auslauf
7=Getriebe
8=Getrieberaum
9=Exzenterraum
10=Ventilsitz
11=Ventilschraube
12=Pfeile
13=Antriebswelle
14=Exzenter

15=Nutring
16=Funktionsanzeiger
17=klarsichtige Verschraubung
18=Pfeil
19=Kolben von 20
20=zweite Pumpe
21=Durchtriebsstange
22=Dosierkolben
23=Dosierpumpe
24=Pumpenraum von 20
25=Einlaufschlitze
26=Pfeile
27=Saugleitung
28=Pumpenzylinder von 23
29=Saugventile
30=Dosierpumpenraum von 23
31=Druckventil
32=Federvorbelastetes Rückschlagventil
33=Dosierleitung
34=Impfstelle
35=Pfeilrichtung
36=Schlauchventil
37=O-Ring
38=Nutringe
39=
40=Pfeilrichtung

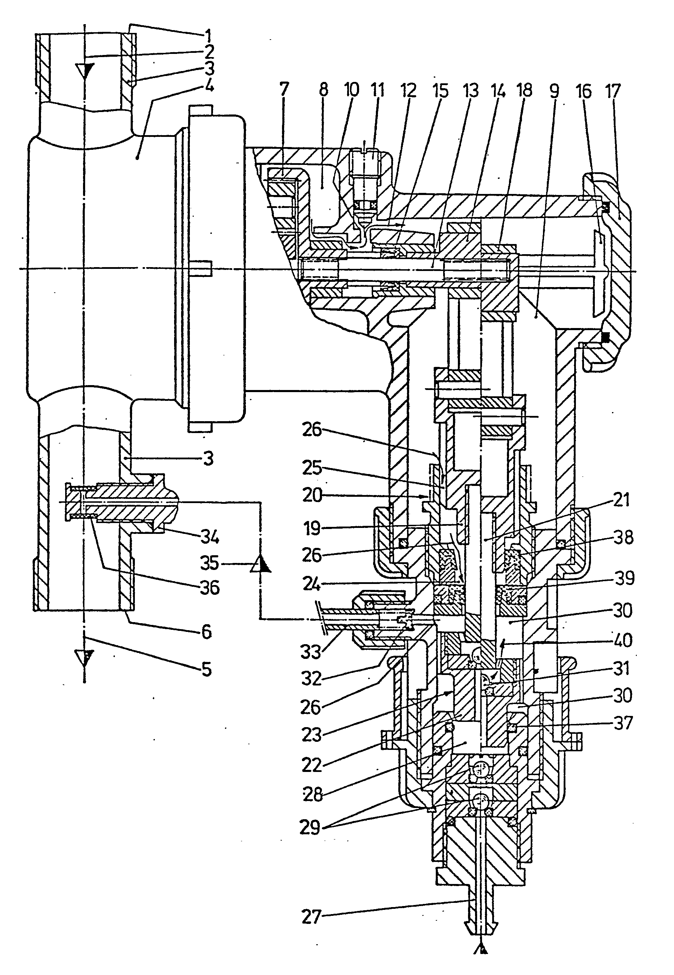

## Patentansprüche

1. Vorrichtung zum Dosieren einer Chemikalienlösung in strömende Frischflüssigkeit, insbesondere Wasser, einer Flüssigkeitsleitung, insbesondere Wasserleitung, mit Hilfe einer durch den Flüssigkeitsdruck, insbesondere Wasserdruck, mechanisch angetriebenen Kolbendosierpumpe (23), die die Chemikalienlösung aus einem Produktvorratsbehälter in ihren eine Menge der Flüssigkeit enthaltenden Dosierpumpenraum (30) fördert und aus diesem über ein federvorbelastetes Rückschlagventil (32) gegen die Federkraft des letzteren in die Flüssigkeitsleitung eintreibt gekennzeichnet durch eine den Dosierpumpenraum (30) mit Frischflüssigkeit unter Druck beaufschlagende, zweite Pumpe (20) mit mit dem Dosierkolben (22) der Dosierpumpe (23) gleichlaufendem Kolben (19), wobei die Kolben (19, 22) der beiden Pumpen (20, 23) zueinander unbeweglich mit Hilfe einer Durchtriebsstange (21) aneinandergekoppelt sind.

2. Vorrichtung nach Anspruch 1, gekennzeichnet durch mindestens zwei um die Durchtriebsstange (21) gelegte und als Ventil zwischen den Pumpenraum (24) der zweiten Pumpe (20) und dem Dosierpumpenraum (30) wirkende, federnde Nutringe (38, 39).

3. Vorrichtung nach den Ansprüchen 1 oder 2, dadurch gekennzeichnet, daß der Pumpenraum (24) der zweiten Pumpe (20) bei Austritt von deren Kolben (19) aus dem zugehörigen Zylinder mit dem (vollen) Druck der Flüssigkeitsleitung (3) beaufschlagt ist.

## Revendications

1. Appareil pour le dosage d'une solution d'agent chimique dans un liquide frais en cours d'écoulement dans une conduite, tel que, notamment, de l'eau dans une conduite d'eau, à l'aide d'une pompe doseuse à piston (23) entrainée mécaniquement par la pression du liquide, en particulier la pression d'eau, et qui amène la solution d'agent chimique d'un réservoir à produit à sa cavité de pompe doseuse (30) contenant une quantité due liquide et la pousse de cette cavité dans la conduite, en passant par un clapet anti-retour (32), soumis à une précharge par ressort, contre la force élastique de celui-ci, caractérisé par le fait qu'il comporte une deuxième pompe (20) alimentant la cavité de pompe doseuse (30) en liquide frais sous pression et munie d'un piston (19) fonctionnant en synchronisme avec le piston doseur (22) de la pompe doseuse (23), les pistons (19, 22) des deux pompes (20, 23) étant accouplés entre eux sans pouvoir se déplacer l'un par rapport à l'autre, à l'aide d'une tige d'entraînement (21).

2. Appareil selon la revendication 1, caractérisé par le fait qu'il comporte au moins deux anneaux en U élastiques (38, 39), placés autour de la tige d'entraînement (21) et jouant le rôle de clapet entre la cavité de pompe (24) de la deuxième pompe (20) et la cavité de pompe doseuse (30).

3. Appareil selon l'une ou l'autre des revendications 1 ou 2, caractérisé par le fait que la cavité de pompe (24) de la deuxième pompe (20) est soumise, lorsque son piston (19) sort du corps de pompe correspondant, à la pression (totale) de la conduite à liquide (3).

## Claims

1. Device for the metering of a chemical solution into fresh liquid, particularly water, of a liquid duct, particularly a water duct, with the aid of a piston metering pump (23), which is mechanically driven by the liquid pressure, particularly water pressure and which conveys the chemical solution out of a product supply container into its metering pump chamber (30), which contains a quantity of the liquid, and drives the chemical solution out of this chamber through a spring-biassed non-return valve (32) against the spring force of the latter into the liquid duct, characterised by a second pump (20) charging the metering pump chamber (30) with fresh liquid under pressure and having a piston (19) running in synchronism with the metering piston (22) of the metering pump (23), wherein the pistons (19, 22) of both the pumps (20, 23) are coupled to each other immovably relative to 'each other with the aid of a drive-transmitting rod (21).

2. Device according to claim 1, characterised by at least two resilient grooved rings (38, 39) laid around the drive-transmitting rod (21) and acting as valve between the pump chamber (24) of the second pump (20) and the metering pump chamber (30).

3. Device according to the claims 1 or 2, characterised thereby, that the pump chamber (24) of the second pump (20) on the exit of its piston (19) from the associated cylinder is acted on by the (full) pressure of the liquid duct (3).